(19) Europäisches Patentamt
European Patent Office
Office européen des brevets

(11) **EP 4 343 475 B1**

(12) **EUROPEAN PATENT SPECIFICATION**

(45) Date of publication and mention
of the grant of the patent:
**06.08.2025 Bulletin 2025/32**

(21) Application number: **22197076.7**

(22) Date of filing: **22.09.2022**

(51) International Patent Classification (IPC):
**G05B 23/02** $^{(2006.01)}$

(52) Cooperative Patent Classification (CPC):
**G05B 23/0221; G05B 23/0254**

(54) **MONITORING DEVICE, MONITORED SYSTEM, METHOD FOR MONITORING AND COMPUTER PROGRAM PRODUCT**

ÜBERWACHUNGSVORRICHTUNG, ÜBERWACHTES SYSTEM, VERFAHREN ZUR ÜBERWACHUNG UND COMPUTERPROGRAMMPRODUKT

DISPOSITIF DE SURVEILLANCE, SYSTÈME SURVEILLÉ, PROCÉDÉ DE SURVEILLANCE ET PRODUIT PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2024 Bulletin 2024/13**

(73) Proprietor: **Hitachi, Ltd.**
**Tokyo 100-8280 (JP)**

(72) Inventors:
- **KATO, Tetsuji**
  **London, EC2Y 5AJ (GB)**
- **YAMASHITA, Tomoaki**
  **London, EC2Y 5AJ (GB)**
- **KILSBY, Paul**
  **London, EC2Y 5AJ (GB)**

(74) Representative: **MERH-IP Matias Erny Reichl Hoffmann**
**Patentanwälte PartG mbB**
**Paul-Heyse-Straße 29**
**80336 München (DE)**

(56) References cited:
**US-A1- 2019 301 979**

- **YUNG S K ET AL: "LOCAL SENSOR VALIDATION", MEASUREMENT AND CONTROL, INSTITUTE OF MEASUREMENT AND CONTROL. LONDON, GB, vol. 22, no. 5, 22 June 1989 (1989-06-22), pages 132 - 141, XP000120763, ISSN: 0020-2940**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The invention relates to a monitoring device for monitoring operating components of a system, a monitored system, a method for monitoring operating components of a system and a computer program product for use in a monitoring device.

### BACKGROUND OF THE INVENTION

In industrial applications the monitoring of operating components of a system is essential to ensure the system's intended operation so as to avoid unwanted operating states or even a complete loss of function.

In this manner, an abnormal state of a system's component shall be forecasted and/or identified at an early stage, such that appropriate countermeasures in the sense of maintenance can be taken before the intended operation of the system is no longer possible.

The monitoring of an operating component usually utilizes the concept of machine learning so as to determine in a probabilistic manner a probability model of the component from training data in a first step, which describes the probability of error-free operation of the component in dependence of a chosen monitoring variable. In a second step, the probability model is used to calculate specific probabilities based on a current value of a monitoring variable of the component, allowing a probability-based statement about the current operating state, i.e., whether to expect an error of the component or not.

The validity of this statement thereby depends on the quality of the probability model which is on the other hand highly dependent on the available training data. The better and the more extensive the available training data is, the higher the quality of the probability model based thereon will be.

However, there are usually some components of the system for which failure is naturally quite rare, such that no or solely a very limited and/or localised amount of training data is available, which usually does not allow to set up a valid and reliable probability model.

A poor probability models causes, when utilized in monitoring, a tremendous amount of false-positive monitoring results, indicating that the component needs to be maintained although this is not the case, consequently leading to a very low maintenance efficiency.

To encounter this problem, the prior art suggests methods of post-processing the probability models so as to make them more suitable for the application in probabilistic monitoring.

In this manner, JP 2016 099 863 A suggest to incorporated additional dimensions to the training data, i.e., incorporating an additional time axis, via which an artificial spreading of the training data with respect to the additional time axis is incorporated, slightly improving the respective probability model based thereon.

However, such an approach incorporates an additional dimension to the problem, i.e., time, which increases the complexity of the probability model on the one hand and on the other hand makes it difficult or even impossible to compare the resulting probability model to those of components which do not require such an additional dimension.

As consequence, the possibility of comparing aforesaid components of the system during monitoring is generally lost, making it impossible to perform certain monitoring operations, such as setting a maintenance priority of several monitored operating components. Furthermore, US 2019/301979 A1 shows a control computation unit that executes control computation for controlling a control target; and a first abnormality detection unit that provides a state value related to a monitoring target among state values collected by the control computation unit to a model indicating the monitoring target that is defined by abnormality detection parameters and a learning data set, to detect an abnormality that may occur in the monitoring target. The first abnormality detection unit includes a calculation unit that calculates a score using a feature quantity that is calculated from a state value related to the monitoring target according to the abnormality detection parameters, and a determination unit that performs a determination using the score calculated by the calculation unit and a first determination reference and a second determination reference included in the abnormality detection parameters, outputs a first determination result when the score matches the first determination reference, and outputs a second determination result when the score matches the second determination reference.

### SUMMARY OF THE INVENTION

Therefore, a technical problem to be solved by the present invention is to improve the maintenance efficiency for a probabilistically monitored system.

This problem is advantageously solved by the monitoring device according to claim 1, the monitored system according to claim 15, the method for monitoring according to claim 16 and the computer program product according to claim 17.

The respective dependent claims herein refer to preferred embodiments, each of which may be provided individually or in combination of one another.

According to a first aspect of the invention, a monitoring device for monitoring operating components of a system is provided, which comprises a probability data device, configured to determine probability data for at least one operating component of the system, which describes a probability distribution of error-free operation of said component in dependence of a monitoring variable of said component, wherein the probability data device is configured to calculate probability data from training data of said component and further to perform a correction step in case the calculated probability data has a dispersion value equal to zero, wherein a correction factor is applied to the calculated probability data such that the determined probability data has a dispersion value greater than zero, a receiving device, configured to receive a value of the monitoring variable of said component from a measuring device connected to said component, a diagnosis device, configured to determine a state parameter for said component in dependence of the received value of the monitoring variable and the determined probability data, and/or an output device, configured to output an output signal corresponding to the determined state parameter.

The system comprises at least the one operating component to be monitored by the monitoring device, but might comprise an arbitrary number of further components.

The system shall thereby be understood as any kind of physically implementable system, which might be a mechanical system, an electrical system, an electromechanical system, a thermodynamical system, a chemical system or the like or even a combination of the aforesaid.

Operating components of said system might be single parts or assemblies of the system, for which a monitoring is advantageous, for example to determine whether a component needs maintenance, i.e., behaves abnormal or even has failed.

The term 'operating component' thereby may encompass measuring devices as well, such as sensors and the like, which might be monitored and whose functionality have to be ensured as well.

As example for such a system, a drivetrain system shall be mentioned, in which operating components might be a combustion engine, a clutch, an engine gearbox, a differential gearbox, a brake and so on.

As further example, a railway system shall be given, in which operating components might be an electric engine of the railway, a brake system and so on.

The probability distribution describes the probability of whether to expect an error-free operation of the component in dependence of the monitoring variable, representing a random variable of the probability distribution in this case.

The probability distribution thereby assigns a certain probability value of error-free operation to each value of the random variable, which might be provided continuously via a function (so-called probability density function) or a graph, or discretely via a probability table or the like.

The error-free operation shall be understood as a desired 'normal' operation state of the component, in which for example no need for maintenance, replacement or reparation of said component is present and the component performs as intended. However, this situation might change due to various effects occurring during operation, such as fatigue, mechanical/electrical/thermal loads, oscillatory behaviour and the like. The error-free operation can be quantified by means of physical quantities of the component. For example, in case of electric components by means of an output voltage, current or power, in case of mechanical components by means of stress, strain, vibrations, output force or torque, and in case of thermodynamical components by means of pressure or temperature.

The probability data determined by the probability data device describes aforesaid probability distribution thereby at least partially, such that the probability data usually comprises only one or more characteristic values of the probability distribution, such as a dispersion value or a mean value.

Said probability data is calculated from training data provided to the probability data device, which may be understood as data recorded over time. Thus, the training data may comprise several data points, wherein one data point is related to a certain time period, i.e., a week, a day, an hour, and may describe whether the operating component was operating normally (error-free) or not for the respective value(s) of the monitoring variable(s) at that time.

The training data might be provided to the probability data device from an external source as well as from an internal source, i.e., a storage device of the monitoring system in which the training data is stored.

The calculation of the probability data preferably takes place according to standard procedures known from probability theory. In this manner, a dispersion value of the probability data might be calculated as mean value of quadratic deviations from a mean value of the event data (corresponds to a variance). Depending on the format of the training data, this might be carried out as summation of discrete values or integration of continuous functions.

The monitoring variable, which may act as random variable for the probability distribution, is related to a measurable physical quantity of the operating component, such as a force, a voltage, a current, a power, an oscillation amplitude and the like or even combinations thereof.

Especially in case of operating components for which only a poor amount of training data is available, there is the risk that the respective probability distribution does not comprise any dispersion (dispersion value equals to zero), which makes it impossible to perform certain probabilistic evaluations.

In these cases, the probability data device offers the advantageous possibility to correct the probability data, such that its dispersion value is adapted to be greater than zero. This allows to perform several post-processing operations, such as divisions by the dispersion value, which would otherwise lead to the difficult-to-handle infinity value, consequently causing false-positive error detection during monitoring.

The determined state parameter of the component may describe the state of the monitored component, which is exposed to potential changes due to operation of the component or due to external influences, in dependence of the received value of the monitoring variable and the determined probability data.

In the simplest case, the state parameter corresponds to a probability value of error-free operation calculated from the received value of the monitoring variable and the determined probability data, but should not be limited thereto.

In this manner, the state parameter might also indicate a severity of an abnormal/undesired operation state, thus, indicating how urgent a need for maintenance might be. In fact, the state parameter indicates a level of abnormality or a level of malfunction or level of maintenance need of said component.

With the aforementioned monitoring device, it is now possible to also handle the monitoring of components for which only a very limited or poor amount of training data is available, especially in case of probabilistic monitoring. Whereas said components could not have been reliably monitored in the prior art, the inventive monitoring device can be used to monitor components for which plenty of training data is available as well as components for which this might not be the case.

In this manner, various kinds of components can be monitored and as well be compared to each other while ensuring that the risk of a false-positive error detection is minimized, subsequently increasing the maintenance efficiency for the system.

The inventive monitoring device further enables the application of said device within the field of 'machine learning', naturally requiring a numerical handling of every possible scenario, wherein also the cases with poor training data can now satisfactorily be handled.

In the following, some examples for probability distributions and the monitoring variable as random variable shall be given.

Preferably, the training data are related to a predefined event, wherein the training data comprise for each of multiple predefined time periods a total number of occurrences of said event as well as the number of occurrences of said event which are normal for the respective component during the respective time period. The monitoring variable (random variable) is thereby chosen as the total number of occurrences of said event per time period.

In this case, 'normal' shall be understood such that the number of occurrences of said event in this manner is still acceptable, i.e., 'error-free', so as to not represent an abnormal state. Said time periods are preferably set to one day, but could also be set to several days, a week or the like.

As a first example, the event might be defined as the occurrence of an error-signal of the measuring device connected to the component, wherein the training data contains the total number of error-signals per time period as well as the number of false-positive error-signals per time period. The monitoring variable (random variable) is thereby chosen as total number of said error-signals.

As a second example, the event might be defined as a threshold-crossing of a measurand of the measuring device connected to the component, wherein the training data contains the total number of threshold-crossings per time period as well as the number of threshold-crossings per day, which still represent a normal, error-free operation of the component. The monitoring variable (random variable) is thereby chosen as total number of said threshold-crossing.

As specific example in this manner, the event could be defined as an oscillation amplitude of a mechanical component crossing an amplitude-threshold, wherein a number of threshold-crossings per day considered to be normal could be equal to two, i.e., during run-up of the mechanical component in the morning and during shutdown in the evening.

It shall be understood that components of the monitoring device performing determination or calculation steps - first and foremost the probability data device and the diagnosis device - comprise appropriate computation means for performing these steps, such as a processor unit, a microcontroller or the like.

The probability data device and the diagnosis device can thereby share a common computation means or be provided each with a separate computation means.

In a preferred embodiment, probability data comprises at least a dispersion value and a mean value to describe the probability density distribution.

In this way, a very simple and sufficient description of a probability distribution can be provided by means of solely two values, by which a computational effort can be significantly decreased.

In a preferred embodiment, the diagnosis device is configured to determine the state parameter on basis of the dispersion value of the determined probability distribution, a mean value of the determined probability distribution and the received value of the monitoring variable.

In this way, the state parameter takes into account several properties of the underlying probability distribution. In fact, mean value and dispersion value allow a more reliable statement concerning the state of the component compared to a case in which solely the mean value would be used.

Preferably, the state parameter represents a severity parameter indicating how severe the deviation of the component from its desired, error-free operating state is.

Preferably, the state parameter is a severity parameter S, which is defined according to equation 1, wherein X represents the value of the monitoring variable, $\mu$ represents the mean value and $\sigma$ represents the dispersion value.

$$S = \frac{|\mu - X|}{\sigma} \qquad \text{[Equation 1]}$$

The higher the severity parameter S, the more severe the deviation of the component from its desired, error-free operating state is. A specific deviation of the value of the monitoring variable X from the mean value μ is considered to be more severe in case the dispersion value σ is rather low.

By means of the aforesaid severity parameter, a representative comparison for different time instants for said component as well as a representative comparison with severity parameters of other components is possible.

As it can be seen from equation 1, a dispersion value σ would lead to impractical results of the severity parameter. Depending on the value of the numerator, the severity parameter S might not be defined or tend to infinity, both cases being impractical to be further evaluated.

By means of the inventive monitoring device, such scenarios can advantageously be avoided, as cases, for which the calculated dispersion value is equal to zero, further undergo the described correction step, so as to obtain a dispersion value unequal to zero.

It shall be remarked, that the state parameter is not limited to the aforementioned term according to equation 1, but can for example be any mathematical expression containing the right-hand-side as factor, summand or the like.

In a preferred embodiment, the probability data device is configured to apply the correction factor by adding the correction factor to the dispersion value of the calculated probability data.

In this way, a less complex way of dealing with critical dispersion values is provided by solely performing an addition, wherein the correction factor represents a predetermined minimal dispersion value to be added to the dispersion value of the probability data being zero. Said predetermined minimal dispersion value might be manually specified, i.e., by a system operator, or be determined from system data.

In a preferred embodiment, the dispersion is specified as a variance or as a standard deviation or as an interquartile range, which represent an established way of describing a dispersion of a probability distribution. Preferably, the dispersion is specified as variance.

In a preferred embodiment, the output device comprises an evaluation unit, configured to determine a priority parameter, to which at least a first and a second priority value can be assigned, on basis of the determined state parameter, wherein the evaluation unit is configured to assign the first priority value to the priority parameter in case the determined state parameter is lower than a predetermined priority threshold, and wherein the evaluation unit is configured to assign the second priority value to the priority parameter in case the determined state parameter is greater than or equal to the predetermined priority threshold.

In this way, the monitoring device is provided with a priorization functionality. This is especially useful for cases, in which several components are monitored, so as to directly identify those with the highest priority, i.e., for maintenance.

Preferably, the state parameter is defined as severity parameter and the priority threshold is a predefined severity threshold.

The priority parameter is thereby not limited to said two values, but can exemplary take three, four or even five different values, indicating different levels of priority.

Preferably, the priority parameter can take three values, wherein the first represents the case of 'no maintenance required', the second represents the case of 'maintenance required' and the third one represents the case of 'maintenance immediately required'.

In a preferred embodiment, the output device comprises a display unit, configured to display the determined state parameter.

In this way, the monitoring device provides an easy way of depicting monitoring results to a system operator, a maintenance worker or the like.

Preferably, the display unit is configured to display the determined state parameter of the component as well as to display the associated determined priority parameter.

In this way the worker or system operator is not only informed about the current state of the operating component, but simultaneously receives the information of the whether the current state requires instant maintenance (high priority) or not.

Preferably, the display unit is configured to display the priority parameter by means of color-coding.

In this way, the priority parameter is displayed in a visually catchy way, which is quick to grasp for the worker or system operator.

In a preferred embodiment, the receiving device is further configured to receive the training data of said component from the measuring device and to provide it to the probability data device and/or to store it in a storage device of the monitoring device and/or to store it in a storage unit of the probability data device.

In a preferred embodiment, the system comprises N further operating components, with N≥1, and wherein the probability data device is configured to calculate for each of the N further components probability data from training data of the respective component, describing a probability distribution of error-free operation of the respective component in dependence of a respective monitoring variable, and wherein the probability data device is further configured to determine the correction factor from the calculated probability data for the N further components.

In this way, the monitoring device is further related to numerous other components, which advantageously act as database for determining the correction factor needed for correcting probability data based on poor training data.

By means of using probability data from other components, a certain coherence with the system is maintained, preventing a potentially non-representative dispersion value after performing the correction step.

In a preferred embodiment, the probability data device is configured to determine a minimal non-zero dispersion value among the calculated probability data for the N further components and to assign the determined minimal non-zero dispersion value to the correction factor.

In this way, a representative educated case for the correction factor is made.

In a preferred embodiment, the system comprises multiple operating categories in which operating components are managed, wherein the N further components belong to the same operating category.

In this way, the correction factor obtained from the probability data of the multiple components becomes even more representative, as there is a larger coherence in case the components belong to the same category.

Examples for said categories might be 'mechanical components' or 'electrical components.

In a preferred embodiment, the probability data device is configured to perform a correction step for each of the N further components in case the calculated probability data of the respective component has a dispersion value equal to zero, wherein a correction factor is applied to the calculated probability data such that probability data is determined having a dispersion value greater than zero, and wherein the receiving device is configured to receive for each of the N further components a value of the respective monitoring variable from a measuring device connected to respective component, and wherein the diagnosis device is configured to determine for each of the N further components a state parameter in dependence of the received value of the respective monitoring variable and the respective determined probability data.

In this way, the monitoring of the system is extended on the numerous further operating components, allowing a simultaneous monitoring by means of one monitoring device, wherein the advantageous correction step can be performed for each of the N further components, allowing a reliable and valid probabilistic monitoring of the multiple components.

Preferably, the monitoring device is configured to perform every action and/or operation with respect to said component as well for the N further operating components, which inter alia include performing the correction step in case a dispersion value of calculated probability data is zero, determining a severity parameter, determining a priority parameter and so on.

In a preferred embodiment, the output device is configured to output for each of the N further components an output signal corresponding to the determined state parameter of the respective component.

Preferably, the display unit of the output device is configured to display the determined state parameters of the N further components, and even more preferable, to simultaneously display an associated priority parameter, in case it has been determined.

Preferably, the display unit is configured to display the determined state parameters in a descending or ascending manner.

In this way, an alternative approach for priorizing is provided.

According to a second aspect of the invention, a monitored system is provided, which comprises at least one operating component, at least one measuring device, which is connected to said component and which is configured to measure a monitoring variable of said component, and a monitoring device according to the first aspect for monitoring said component, wherein the receiving device of the monitoring device is connected to said measuring device.

Said system provides the advantageous functionality of the monitoring device according to the first aspect within a system to be monitored, consequently leading to an improved maintenance efficiency, as said component can sufficiently be monitored even in case there is only a very limited or poor amount of training data available.

Preferably, said system contains multiple further operating components, each connected to one of multiple further measuring devices for measuring a monitoring variable of the respective component, wherein the multiple further measuring devices are connected to the receiving device of the monitoring device.

This allows a monitoring of numerous operating components of the monitored system.

Preferably, said system is a railway system and said operating components are operating components of said railway system.

Non-limiting examples for such components might be train-related components, such as drivetrains, electric engines and the like, or railway-network-related components, such as signalling devices, power supply lines or switches of the railway tracks and the like.

Especially in railway systems, training data are rather poor, as certain events associated with specific components do not regularly occur, which can be compensated by means of the advantageous monitoring device according to the first aspect, used for monitoring the railway system.

According to a third aspect of the invention, a method for monitoring operating components of a system is provided, which comprises the steps of determining probability data for at least one operating component of the system on basis of training data of said component, wherein the probability data describes a probability distribution of error-free operation of said component in dependence of a monitoring variable of said component, further comprising calculating probability data from training data of said component, and correcting the calculated probability data in case the calculated probability data calculated has a dispersion value equal to zero, by applying a correction factor to the calculated probability data such that the determined probability data has a dispersion value greater than zero, receiving a value of the monitoring variable of said component from a measuring device connected to said component, determining a state parameter for said component in dependence of the received value of the monitoring variable and the determined probability data and outputting an output signal corresponding to the determined state parameter.

By means of the third aspect, a method for monitoring an operating component is provided, essentially offering the same advantageous as already described in conjunction with the first aspect of the invention, i.e., an improved maintenance efficiency, as also components can be monitored for which only a very limited or poor amount of training data is available.

Preferably, the step of correcting the calculated probability comprises an addition of the correction factor to the dispersion value of the calculated probability data.

Preferably, the step of determining the state parameter comprises a determining of the state parameter on basis of the dispersion value of the determined probability distribution, a mean value of the determined probability distribution and the received value of the monitoring variable.

Preferably, the method comprises the step of determining a priority parameter, to which at least a first and a second priority value can be assigned, on basis of the determined state parameter, wherein the first priority value is assigned to the priority parameter in case the determined state parameter is lower than a predetermined priority threshold, and wherein the second priority value is assigned to the priority parameter in case the determined state parameter is greater than or equal to the predetermined priority threshold.

Preferably, the step of outputting an output signal comprises a displaying of the determined state parameter on a display unit.

Preferably, the step of outputting an output signal further comprises a displaying of the determined priority parameter (in case it has been determined), in particular, by means of a color-coding.

Preferably, the system comprises N further operating components, with N≥1, wherein the method further comprises the step of calculating probability data for each of the N further components from the training data of the respective component, describing a probability distribution of error-free operation of the respective component in dependence of a respective monitoring variable, and the step of determining the correction factor from the calculated probability data for the N further components.

Preferably, the step of determining the correction factor comprises a determining of a minimal non-zero dispersion value among the calculated probability data for the N further components and an assigning of the determined minimal non-zero dispersion value to the correction factor.

Preferably, the method further comprises the step of correcting the calculated probability data of one or more of the N further components in case the calculated probability data of the one or more components has a dispersion value equal to zero, wherein a correction factor is applied to the calculated probability data such that probability data for the respective component is determined having a dispersion value greater than zero, the step of receiving a value of the monitoring variable for each of the N further components from a measuring device connected to the respective component, and the step of determining for each of the N further components a state parameter in dependence of the received value of respective monitoring variable and the respective determined probability data.

According to a fourth aspect of the invention, a computer program product for use in a monitoring device according to the first aspect is provided, wherein the computer program product comprises instructions which, when the computer program product is executed, causes the monitoring device to carry out the method according to third aspect of the invention.

It shall be emphasized that the present invention is in no way limited to the embodiments and their features previously described. The invention further encompasses modifications of those embodiments, in particular those resulting from modifications and/or combinations of individual or multiple features of the described embodiments within the scope of protection of the independent claims.

Further aspects and advantages of the invention as well as specific examples of the aforementioned embodiments are described below with reference to the drawings shown in the accompanying figures. Again it is noted that combinations of the herein described examples and/or embodiments or parts thereof are within the scope of this disclosure.

Fig. 1 shows a schematic set-up of an example of the monitoring device according to the first aspect of the invention.

Fig. 2 shows an example for an output device with display unit of the monitoring device according to the first aspect.

Fig. 3 shows exemplary probability distributions and probability data determined on basis thereon.

Fig. 4 shows exemplary probability distributions with corresponding probability data and state parameters determined on basis thereon.

Fig. 5 shows a flowchart of an example of the method for monitoring operating components according to the third aspect of the invention.

## DETAILED DESCRIPTION OF THE DRAWINGS

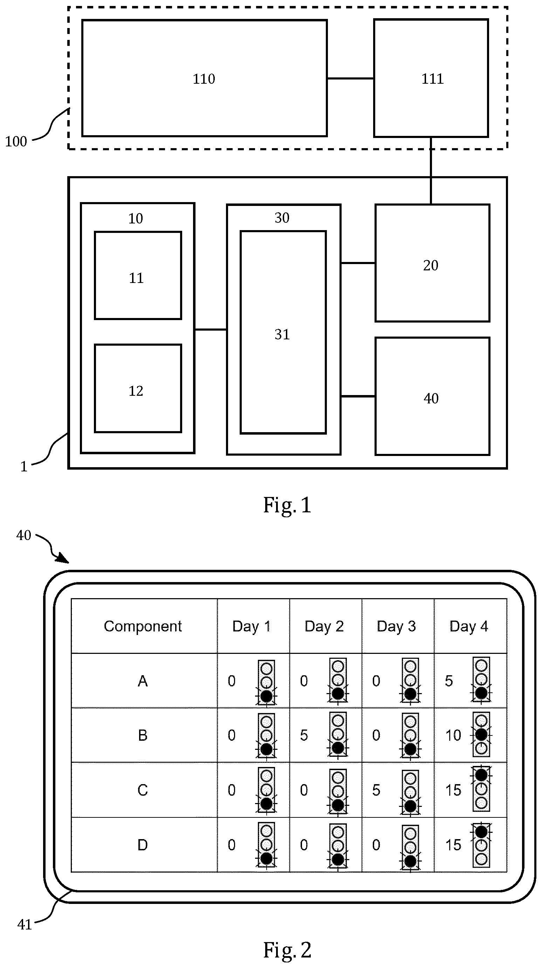

Fig. 1 shows a schematic set-up of an example of the monitoring device 1 according to the first aspect of the invention.

The monitoring device is configured to monitor operating components of a system 100, for which a first operating component 110 is shown in Fig. 1.

The monitoring device 1 comprises a probability data device 10, a receiving device 20, a diagnosis device 30 and an output device 40, wherein data connections are indicated by connecting lines.

The probability data device 10 comprises a processor unit 11 for (which shall include the meaning of configured to/for) calculations and a storage unit 12 for storing data. The probability data device 10 is configured to determine probability data at least for the first operating component 110 of the system 100, wherein the probability data describes a probability distribution of error-free operation of said component 110 in dependence of a monitoring variable of said component 110.

The probability data device 10 or more specifically its processor unit 11 is thereby configured to calculate probability data from training data of said component 110, which are provided as stored data within the storage unit in this example.

Further, the processor unit 11 is configured to perform a correction step in case the calculated probability data has a dispersion value equal to zero, wherein a correction factor is applied to the calculated probability data such that the determined probability data has a dispersion value greater than zero.

The receiving device 20 is configured to receive a value of the monitoring variable of said component 110 from a measuring device 111 connected to said component 110. The data connection between the receiving device 20 and the measuring device 111 can thereby be wired or wireless.

The diagnosis device 30 comprises a processor unit 31 for calculations.

The diagnosis device 30 or more specifically its processor unit 31 is configured to determine a state parameter for said component 110 in dependence of the value of the monitoring variable received by the receiving device 20 and the probability data determined (and possibly corrected) by the probability data device 10.

In particular, the processor unit 31 is configured to determine the state parameter as a severity parameter, preferably according to abovementioned equation 1.

The output device 40 is configured to output an output signal corresponding to the state parameter determined by the diagnosis device 30, for example by means of a display unit, exemplary shown in Fig. 2.

With the exemplary monitoring device 1, it is possible to monitor a component of a system for which only a very limited or poor amount of training data is available in a probabilistic manner.

This decreases for example the risk of a false-positive error detection of such a component, thus, providing a higher maintenance efficiency, as inter alia the amount of unnecessary maintenance actions can significantly be reduced.

Fig. 2 shows an example for an output device 40 with display unit 41 of the monitoring device according to the first aspect used for monitoring operating components A, B, C and D of a system.

The monitoring device is configured to monitor the operating components A, B, C and D, resulting in determined state parameters for each monitored component. The state parameter represents in the given example a severity parameter indicating how severe the deviation of the respective component from its desired, error-free operating state is.

A repeated description on how the state parameters are determined is skipped at this point.

The monitoring device comprises the output 40 device shown in Fig. 2, which comprises the display unit 41 on which the determined state parameters of the components A, B, C and D are depicted per day as numerical values. The higher the numerical value is, the more severe the deviation of the component from its desired, error-free operating state is.

The display unit 41 according to the example in Fig. 2 is configured to display the state parameters of the four components A, B, C and D in table format. In the given example the highest severity is thereby present for components C and D on Day 4, indicated by the value '15'.

**The** output device further comprises an evaluation unit (not shown), configured to determine a priority parameter, to which at least a first, a second and a third priority value can be assigned on basis of the determined state parameter.

The evaluation unit is configured to assign the first priority value to the priority parameter in case the determined state parameter is in a first exemplary value range between 0 and 7, to assign the second priority value to the priority parameter in case the determined state parameter is in a second exemplary value range between 8 and 14, and to assign the first priority value to the priority parameter in case the determined state parameter is equal or larger than the exemplary value 15.

The display unit 41 is thereby configured to not only display the determined state parameter of the components A, B, C and D, but as well to display the associated priority parameter determined by the evaluation unit.

In the given example in Fig. 2, this is realized by means of color-coding, indicated by the schematic traffic light system with the conventionally known color-coding red, yellow and green from top to down, wherein the principle of color-coding shall not be limited to those.

In this way, a worker or system operator is not only informed about the current state of the operating components A, B, C and D by means of the numerical values of the state parameters, but simultaneously receives the information of whether the current state requires instant maintenance (high priority indicated by 'red'), contemporary maintenance (medium priority indicated by 'yellow') or no maintenance (low priority indicated by 'green'), improving the maintenance efficiency.

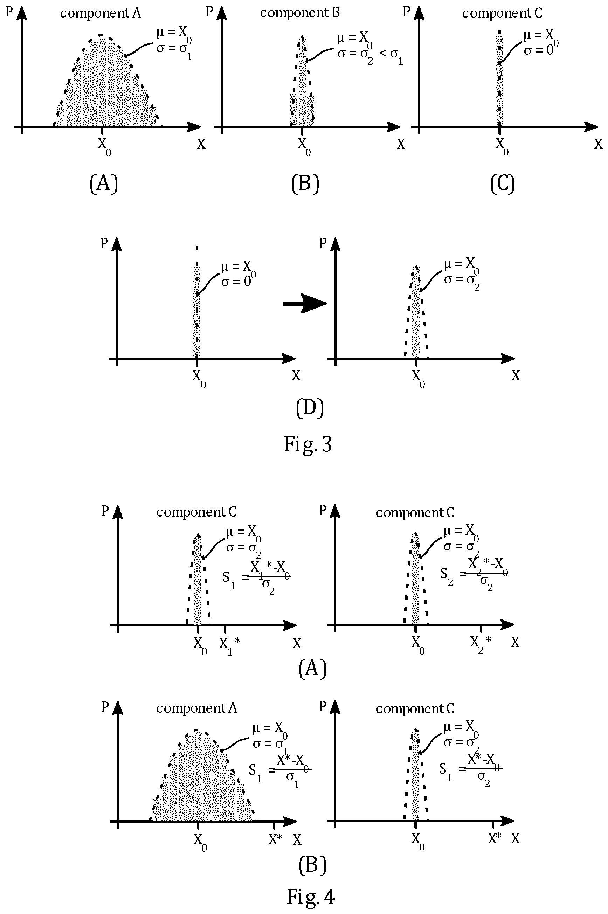

Fig. 3 shows exemplary probability distributions and probability data determined on basis thereon.

Figs. 3A to 3C show probability distributions for the components A, B and C, wherein X represents the monitoring variable (random variable) and P represents the probability of error-free operation of the respective component, depending on the monitoring variable X.

Although the monitoring variable is represented by the same symbol X for all components, it is remarked, that the monitoring variables of different components of the system are usually different from each other.

It shall be further remarked, that the probability data can generally (and not limited to the given example) be normalized with respect to the monitoring variable, such that a quantitative coherence is obtained between probability data of different components.

The grey bars within each diagram represent the training data and the dashed line represent a probability distribution based thereon, which is described via the probability data comprising a mean value $\mu$ and a dispersion value $\sigma$, i.e., a variance.

For component A, sufficient and widely spread training data is available, leading to a probability distribution with mean value $\mu=X_0$ and dispersion value $\sigma=\sigma_1$ (cf. Fig. 3A).

For component B, the training data is rather localised in a smaller, leading to a probability distribution with mean value $\mu=X_0$ and a smaller dispersion value $\sigma= \sigma_2 < \sigma_1$ than the probability distribution of component A (cf. Fig. 3B).

For component C, the training data is poor, i.e. solely one discrete value is available within the training data, leading to a probability distribution with mean value $\mu=X_0$ and no dispersion ($\sigma=O$) (cf. Fig. 3C).

As is can be seen from Figs. 3A to 3C the probability distribution and, thus, the probability data is highly dependent on the available training data, wherein poor training data leads to probability data with a dispersion value equal to zero, which is difficult to handle in diagnosis steps, as described later on in relation to Fig. 4.

According to the invention, a correction step is performed to correct the calculated probability data of component C, such that the corrected probability data do not comprise a dispersion value equal to zero (cf. Fig. 3D). This is done by applying a correction factor to the probability data, which results in the artificial probability distribution shown on the right-hand-side of Fig. 3D for component C, whose probability data comprise a corrected dispersion value $\sigma= \sigma_2$, allowing a monitoring of component C in a probabilistic manner.

In the given example, the correction factor is determined from the probability data of the other components A and B, comprising the non-zero dispersion values $\sigma_1$ and $\sigma_2$, wherein the correction factor is chosen as the minimum of those values, i.e., the dispersion value $\sigma_1$ is assigned to correction factor, which is afterwards applied to the probability data of component C, as shown in Fig. 3D.

Fig. 4 shows exemplary probability distributions with corresponding probability data and state parameters determined on basis thereon.

The diagrams shown in Figs. 4A and 4B are based on the diagrams for components A and C shown in Fig. 3, such that a repeated description of the common elements is skipped at this point. Further to Fig. 3, the diagrams in Figs. 4A and 4B comprise a specific value $X^*$, $X_1^*, X_2^*> X_1^*$ of the monitoring variable of the respective component, based on which a state parameter (severity parameter S) is computed.

The severity parameter S, exemplary computed on basis of equation 1 described above, indicating how severe the deviation of a components current operating state (represented by $X^*, X_1^*, X_2^*$) from its desired, error-free operating state is, described by the respective probability data.

Fig. 4A shows a first case, in which a value $X_1^*$ of the monitoring variable X of component C is received, as well as second case, in which a larger value $X_2^*$ of the monitoring variable X of component C is received.

The probability data of component C has been corrected according to the correction step shown in Fig. 3D, allowing a probabilistic comparison of the two previously described cases of component C. As a result, the relation $S_2>S_1$ can easily be obtained, indicating that the second case is more severe and would for example require instant maintenance.

Such an analysis would not have been possible with the originally calculated probability data shown in Fig. 3C, subsequently leading to severity parameters $S_1$, $S_2$ tending to infinity.

In contrast to the cases shown in Fig. 4A, Fig. 4B shows a comparison of two different components, namely component A and component C, wherein the probability data of component A has a higher dispersion value, i.e., $\sigma_1 > \sigma_2$.

For both components the quantitively identical value $X^*$ of the respective monitoring variable X is received. Similar to the cases in Fig. 4A, the severity parameters $S_1$ and $S_2$ of the two components are determined, wherein the relation $S_2>S_1$ can easily be obtained, indicating that the deviation of the operating state of component C is more severe than the operating state of component A.

By means of that, a maintenance priority could be defined according to which component C would have to maintained before component A.

Such a comparative analysis of different components would not have been possible with the originally calculated probability data shown in Fig. 3C, subsequently leading to a severity parameter $S_2$ of component C tending to infinity.

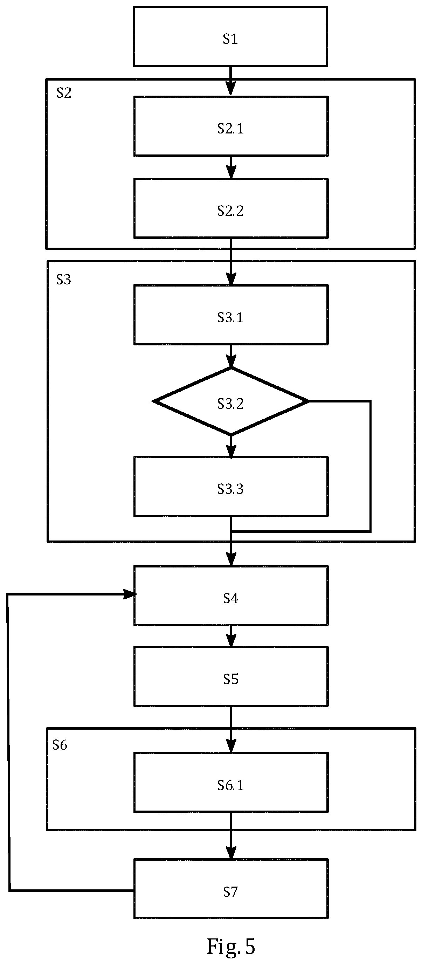

Fig. 5 shows a flowchart of an example of the method for monitoring operating components of a system according to the third aspect of the invention.

The exemplary system comprises a first operating component to be monitored as well as N further operating components with N≥1.

In step S1, probability data for each of the N further components are calculated from training data of the respective component, describing a probability distribution of error-free operation of the respective component in dependence of a respective monitoring variable.

In step S2, a correction factor is determined from the calculated probability data for the N further components, comprising substep S2.1, in which a minimal non-zero dispersion value among the calculated probability data for the N further components is determined, and substep S2.2, in which the determined minimal non-zero dispersion value is assigned to the correction factor.

In the given example, the steps S1 and S2 are only performed once to determine the correction factor, but can also be included in the repeating loop following after step S7.

In a further alternative example, steps S1 and S2 can be replaced by a step of providing a correction factor for correcting dispersion values of probability data being equal to zero. Said correction factor might be manually provided by a system operator or might be an imported correction factor from another system.

In step S3, probability data for the first component of the system is determined on basis of training data of said component, wherein the probability data describes a probability distribution of error-free operation of said component in dependence of a monitoring variable of said component.

Step S3 further comprises substep S3.1, in which probability data from the training data of said component is calculated.

In step S3.2, an evaluation of the calculated dispersion value takes place. In case the calculated probability data has a dispersion value equal to zero, substep S3.3 is performed, otherwise it is continued with step S4.

In substep S3.3 the calculated probability data of the first component is corrected by applying the correction factor determined in step S2 to the calculated probability data, such that the resulting, determined (corrected) probability data has a dispersion value greater than zero.

In the given example, step S3 is only performed once, but can also be included in the repeating loop following after step S7.

In step S4, a value of the monitoring variable of the first component is received from a measuring device connected to said component.

In step S5, a state parameter for the first component is determined in dependence of the received value of the monitoring variable from step S4 and the determined probability data from step S3, wherein the state parameter represents a severity parameter in this example, indicating how severe the deviation of the first component's operating state from its desired, error-free operating state is.

In step S6, an output signal corresponding to the determined state parameter from step S5 is output, comprising the substep S6.1 of displaying the determined state parameter on a display unit.

In step S7, a pause of predetermined length takes place, before the method is partially repeated starting from step S4 again.

By means of the exemplary method described before, a possibility for monitoring at least the first component is provided, allowing to reliably monitor said component in a probabilistic manner, improving maintenance efficiency, i.e., by reducing the number of false-positive error signals of said component. The steps and substeps may also be arranged in a different order or some may be left out or further steps may be added.

It shall be emphasized, that the present invention is in no way limited to the aforementioned examples and their features. The invention further encompasses modifications of those examples, in particular those resulting from modifications and/or combinations of individual or multiple features of the described examples within the scope of protection of the independent claims.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing. Aspects/Examples of the present disclosure may be a software entirely (including firmware, resident software, microcode, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows, if present, generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein and they may be construed to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments or examples are merely illustrative of and are not restrictive on the broad disclosure. The invention is set out in the appended set of claims.

LIST OF REFERENCE NUMBERS

**[0198]**

| | |
|---|---|
| 1 | monitoring device |
| 10 | probability data device |
| 11 | processor unit of probability data device |
| 12 | storage unit |
| 20 | receiving device |
| 30 | diagnosis device |
| 31 | processor unit of diagnosis device |
| 40 | output device |
| 41 | display unit |
| 100 | system |
| 110 | operating component |
| 111 | measuring device |

**Claims**

1.  Monitoring device (1) for monitoring operating components of a system (100), comprising:

    - a probability data device (10), configured to determine probability data for at least one operating component (110) of the system (100), which describes a probability distribution of error-free operation of the at least one operating component (110) in dependence of a monitoring variable of the at least one operating component (110), wherein the probability data device (10) is configured to calculate the probability data from training data of the at least one operating component (110) and further to perform a correction step in case the calculated probability data has a dispersion value equal to zero, wherein a correction factor is applied to the calculated probability data such that the determined probability data has a dispersion value greater than zero;
    - a receiving device (20), configured to receive a value of the monitoring variable of the at least one operating component (110) from a measuring device (111) connected to the at least one operating component (110);
    - a diagnosis device (30), configured to determine a state parameter for the at least one operating component (110) in dependence of the received value of the monitoring variable and the determined probability data; and
    - an output device (40), configured to output an output signal corresponding to the determined state parameter.

2.  Monitoring device (1) according to claim 1, wherein the calculated probability data comprises at least a dispersion value and a mean value to describe the probability density distribution.

3.  Monitoring device (1) according to claim 2, wherein the diagnosis device (30) is configured to determine the state parameter on basis of the dispersion value of the determined probability distribution, a mean value of the determined probability distribution and the received value of the monitoring variable.

4.  Monitoring device (1) according to one of claims 2 to 3, wherein
    the probability data device (10) is configured to apply the correction factor such that a mean value of the determined probability data is equal to the mean value of the calculated probability data.

5.  Monitoring device (1) according to at least one of claims 1 to 4, wherein
    the probability data device (10) is configured to apply the correction factor by adding the correction factor to the dispersion value of the calculated probability data.

6.  Monitoring device (1) according to at least one of claims 1 to 5, wherein
    the dispersion value of the calculated probability data is specified as a variance or as a standard deviation or as an interquartile range.

7.  Monitoring device (1) according to at least one of claims 1 to 6, wherein

    the output device (40) comprises an evaluation unit, configured to determine a priority parameter, to which at least a first and a second priority value can be assigned, on basis of the determined state parameter,
    wherein the evaluation unit is configured to assign the first priority value to the priority parameter in case the determined state parameter is lower than a predetermined priority threshold, and wherein the evaluation unit is configured to assign the second priority value to the priority parameter in case the determined state parameter is greater than or equal to the predetermined priority threshold.

8.  Monitoring device (1) according to at least one of claims 1 to 7, wherein
    the output device (40) comprises a display unit (41), configured to display the determined state parameter.

9. Monitoring device (1) according to at least one of claims 1 to 8, wherein
the receiving device (20) is further configured to receive the training data of the at least one operating component (110) from the measuring device (111) and to provide it to the probability data device (10) and/or to store it in a storage device of the monitoring device (1) and/or to store it in a storage unit (12) of the probability data device (10).

10. Monitoring device (1) according to at least one of claims 1 to 9, wherein

the system (100) comprises N further operating components, with $N \geq 1$, and
wherein the probability data device (10) is configured to calculate for each of the N further components probability data on basis of training data of the respective component, describing a probability distribution of error-free operation of the respective component in dependence of a respective monitoring variable, and
wherein the probability data device (10) is further configured to determine the correction factor from the calculated probability data for the N further components.

11. Monitoring device (1) according to claim 10, wherein
for determining the correction factor the probability data device (10) is configured to determine a minimal non-zero dispersion value among the calculated probability data for the N further components and to assign the determined minimal non-zero dispersion value to the correction factor.

12. Monitoring device (1) according to one of claims 10 to 11, wherein
the system (100) comprises multiple operating categories in which operating components are managed, wherein the N further components belong to the same operating category.

13. Monitoring device (1) according to at least one of claims 10 to 12, wherein

the probability data device (10) is configured to perform a correction step for each of the N further components in case the calculated probability data of the respective component has a dispersion value equal to zero, wherein a correction factor is applied to the calculated probability data such that probability data is determined having a dispersion value greater than zero,
wherein the receiving device (20) is configured to receive for each of the N further components a value of the respective monitoring variable from a measuring device connected to each of the respective components, and
wherein the diagnosis device (30) is configured to determine for each of the N further components a state parameter in dependence of the received value of the respective monitoring variable and the respective determined probability data.

14. Monitoring device (1) according to claim 13, wherein the output device (40) is configured to output for each of the N further components an output signal corresponding to the determined state parameter of the respective component.

15. Monitored system, comprising:

- at least one operating component (110);
- at least one measuring device (111), which is connected to the at least one operating component (110) and which is configured to measure a monitoring variable of the at least one operating component (110); and
- a monitoring device (1) according to at least one of claims 1 to 14 for monitoring the at least one operating component (110), wherein the receiving device (20) of the monitoring device (1) is connected to the at least one operating measuring device (111).

16. Computer-implemented method for monitoring operating components of a system (100), comprising the steps of:

- determining probability data for at least one operating component (110) of the system (100) on basis of training data of the at least one operating component (110), wherein the probability data describes a probability distribution of error-free operation of the at least one operating component (110) in dependence of a monitoring variable of the at least one operating component (110), further comprising:

- calculating the probability data from training data of the at least one operating component (110), and
- correcting the calculated probability data in case the calculated probability data calculated has a dispersion value equal to zero, by applying a correction factor to the calculated probability data such that the determined probability data has a dispersion value greater than zero;

- receiving a value of the monitoring variable of the at least one operating component (110) from a measuring device (111) connected to the at least one operating component (110);

- determining a state parameter for the at least one operating component (110) in dependence of the received value of the monitoring variable and the determined probability data; and
- outputting an output signal corresponding to the determined state parameter.

17. Computer program product for use in a monitoring device (1) according to at least one of claims 1 to 14, comprising instructions which, when the computer program product is executed, causes the computation means of the monitoring device (1) to carry out the method according to claim 16.

**Patentansprüche**

1. Überwachungsvorrichtung (1) zum Überwachen von Betriebskomponenten eines Systems (100), die Folgendes umfasst:

   - eine Wahrscheinlichkeitsdatenvorrichtung (10), die konfiguriert ist, Wahrscheinlichkeitsdaten für mindestens eine Betriebskomponente (110) des Systems (100) zu bestimmen, die eine Wahrscheinlichkeitsverteilung eines fehlerfreien Betriebs der mindestens einen Betriebskomponente (110) in Abhängigkeit von einer Überwachungsvariable der mindestens einen Betriebskomponente (110) beschreiben, wobei die Wahrscheinlichkeitsdatenvorrichtung (10) konfiguriert ist, die Wahrscheinlichkeitsdaten aus Trainingsdaten der mindestens einen Betriebskomponente (110) zu berechnen und ferner einen Korrekturschritt durchzuführen, falls die berechneten Wahrscheinlichkeitsdaten einen Dispergierwert gleich null besitzen, wobei ein Korrekturfaktor auf die berechneten Wahrscheinlichkeitsdaten derart angewendet wird, dass die bestimmten Wahrscheinlichkeitsdaten einen Dispergierwert größer als null besitzen;
   - eine Empfangsvorrichtung (20), die konfiguriert ist, einen Wert der Überwachungsvariable der mindestens einen Betriebskomponente (110) von einer Messvorrichtung (111), die mit der mindestens einen Betriebskomponente (110) verbunden ist, zu empfangen;
   - eine Diagnosevorrichtung (30), die konfiguriert ist, einen Zustandsparameter für die mindestens eine Betriebskomponente (110) in Abhängigkeit von dem empfangenen Wert der Überwachungsvariable und den bestimmten Wahrscheinlichkeitsdaten zu bestimmen; und
   - eine Ausgabevorrichtung (40), die konfiguriert ist, ein Ausgabesignal auszugeben, das dem bestimmten Zustandsparameter entspricht.

2. Überwachungsvorrichtung (1) nach Anspruch 1, wobei

   die berechneten Wahrscheinlichkeitsdaten mindestens einen Dispergierwert und einen Mittelwert umfassen, um die Wahrscheinlichkeitsdichteverteilung zu beschreiben.

3. Überwachungsvorrichtung (1) nach Anspruch 2, wobei

   die Diagnosevorrichtung (30) konfiguriert ist, den Zustandsparameter auf der Grundlage des Dispergierwerts der bestimmten Wahrscheinlichkeitsverteilung, eines Mittelwerts der bestimmten Wahrscheinlichkeitsverteilung und des empfangenen Werts der Überwachungsvariable zu bestimmen.

4. Überwachungsvorrichtung (1) nach einem der Ansprüche 2 bis 3, wobei

   die Wahrscheinlichkeitsdatenvorrichtung (10) konfiguriert ist, den Korrekturfaktor derart anzuwenden, dass ein Mittelwert der bestimmten Wahrscheinlichkeitsdaten gleich dem Mittelwert der berechneten Wahrscheinlichkeitsdaten ist.

5. Überwachungsvorrichtung (1) nach mindestens einem der Ansprüche 1 bis 4, wobei

   die Wahrscheinlichkeitsdatenvorrichtung (10) konfiguriert ist, den Korrekturfaktor durch Addieren des Korrekturfaktors zum Dispergierwert der berechneten Wahrscheinlichkeitsdaten anzuwenden.

6. Überwachungsvorrichtung (1) nach mindestens einem der Ansprüche 1 bis 5, wobei

   der Dispergierwert der berechneten Wahrscheinlichkeitsdaten als eine Varianz oder als eine Standardabweichung oder als ein Interquartilbereich festgelegt ist.

7. Überwachungsvorrichtung (1) nach mindestens einem der Ansprüche 1 bis 6, wobei

   die Ausgabevorrichtung (40) eine Bewertungseinheit umfasst, die konfiguriert ist, einen Prioritätsparameter, dem mindestens ein erster und ein zweiter Prioritätswert zugewiesen werden können, auf der Grundlage des bestimmten Zustandsparameters zu bestimmen, die Bewertungseinheit konfiguriert ist, dem Prioritätsparameter den ersten Prioritätswert zuzuweisen, falls der bestimmte Zustandsparameter kleiner als ein vorgegebener Prioritätsschwellenwert ist, und die Bewertungseinheit konfiguriert ist, dem Prioritätsparameter den zweiten Prioritätswert zuzuweisen, falls der bestimmte Zustandsparameter größer oder gleich dem vorgegebenen Prioritätsschwellenwert ist.

8. Überwachungsvorrichtung (1) nach mindestens einem der Ansprüche 1 bis 7, wobei
die Ausgabevorrichtung (40) eine Anzeigeeinheit (41) umfasst, die konfiguriert ist, den bestimmten Zustandsparameter anzuzeigen.

9. Überwachungsvorrichtung (1) nach mindestens einem der Ansprüche 1 bis 8, wobei
die Empfangsvorrichtung (20) ferner konfiguriert ist, die Trainingsdaten der mindestens einen Betriebskomponente (110) von der Messvorrichtung (111) zu empfangen und sie zur Wahrscheinlichkeitsdatenvorrichtung (10) zu liefern und/oder sie in einer Speichervorrichtung der Überwachungsvorrichtung (1) zu speichern und/oder sie in einer Speichereinheit (12) der Wahrscheinlichkeitsdatenvorrichtung (10) zu speichern.

10. Überwachungsvorrichtung (1) nach mindestens einem der Ansprüche 1 bis 9, wobei

   das System (100) ferner N Betriebskomponenten umfasst, wobei N > 1, und
   die Wahrscheinlichkeitsdatenvorrichtung (10) konfiguriert ist, für jede der N weiteren Komponenten Wahrscheinlichkeitsdaten auf der Grundlage von Trainingsdaten der jeweiligen Komponente zu berechnen, die eine Wahrscheinlichkeitsverteilung eines fehlerfreien Betriebs der jeweiligen Komponente in Abhängigkeit von einer jeweiligen Überwachungsvariable beschreiben, und
   die Wahrscheinlichkeitsdatenvorrichtung (10) ferner konfiguriert ist, den Korrekturfaktor aus den berechneten Wahrscheinlichkeitsdaten für die N weiteren Komponenten zu bestimmen.

11. Überwachungsvorrichtung (1) nach Anspruch 10, wobei
zum Bestimmen des Korrekturfaktors die Wahrscheinlichkeitsdatenvorrichtung (10) konfiguriert ist, einen minimalen Dispergierwert ungleich null unter den berechneten Wahrscheinlichkeitsdaten für die N weiteren Komponenten zu bestimmen und dem Korrekturfaktor den bestimmten minimalen Dispergierwert ungleich null zuzuweisen.

12. Überwachungsvorrichtung (1) nach einem der Ansprüche 10 bis 11, wobei
das System (100) mehrere Betriebskategorien umfasst, in denen Betriebskomponenten gemanagt werden, wobei die N weiteren Komponenten derselben Betriebskategorie angehören.

13. Überwachungsvorrichtung (1) nach mindestens einem der Ansprüche 10 bis 12, wobei

   die Wahrscheinlichkeitsdatenvorrichtung (10) konfiguriert ist, einen Korrekturschritt für jede der N weiteren Komponenten durchzuführen, falls die berechneten Wahrscheinlichkeitsdaten der jeweiligen Komponente einen Dispergierwert gleich null besitzen, wobei ein Korrekturfaktor auf die berechneten Wahrscheinlichkeitsdaten derart angewendet wird, dass Wahrscheinlichkeitsdaten bestimmt werden, die einen Dispergierwert größer als null besitzen,
   die Empfangsvorrichtung (20) konfiguriert ist, für jede der N weiteren Komponenten einen Wert der jeweiligen Überwachungsvariable von einer Messvorrichtung zu empfangen, die mit jeder der jeweiligen Komponenten verbunden ist, und
   die Diagnosevorrichtung (30) konfiguriert ist, für jede der N weiteren Komponenten einen Zustandsparameter in Abhängigkeit von dem empfangenen Wert der jeweiligen Überwachungsvariable und den jeweiligen bestimmten Wahrscheinlichkeitsdaten zu bestimmen.

14. Überwachungsvorrichtung (1) nach Anspruch 13, wobei die Ausgabevorrichtung (40) konfiguriert ist, für jede der N weiteren Komponenten ein Ausgabesignal auszugeben, das dem bestimmten Zustandsparameter der jeweiligen Komponente entspricht.

15. Überwachtes System, das Folgendes umfasst:

   - mindestens eine Betriebskomponente (110);
   - mindestens eine Messvorrichtung (111), die mit der mindestens einen Betriebskomponente (110) verbunden ist und die konfiguriert ist, eine Überwachungsvariable der mindestens einen Betriebskomponente (110) zu messen; und
   - eine Überwachungsvorrichtung (1) nach mindestens einem der Ansprüche 1 bis 14 zum Überwachen der mindestens einen Betriebskomponente (110), wobei die Empfangsvorrichtung (20) der Überwachungsvorrichtung (1) mit der mindestens einen Betriebsmessvorrichtung (111) verbunden ist.

16. Computerimplementiertes Verfahren zum Überwachen von Betriebskomponenten eines Systems (100), das die folgenden Schritte umfasst:

   - Bestimmen von Wahrscheinlichkeitsdaten für mindestens eine Betriebskomponente (110) des Systems (100) auf der Grundlage von Trainingsdaten der mindestens einen Betriebskomponente (110), wobei die Wahrscheinlichkeitsdaten eine Wahrscheinlichkeitsverteilung eines fehlerfreien Betriebs der mindestens einen Betriebskomponente (110) in Abhängigkeit von einer Überwachungsvariable der mindestens einen Betriebskomponente (110) beschreiben, das ferner Folgendes umfasst:

- Berechnen der Wahrscheinlichkeitsdaten aus Trainingsdaten der mindestens einen Betriebskomponente (110) und
- Korrigieren der berechneten Wahrscheinlichkeitsdaten, falls die berechneten Wahrscheinlichkeitsdaten, die berechnet wurden, einen Dispergierwert gleich null besitzen, durch Anwenden eines Korrekturfaktors auf die berechneten Wahrscheinlichkeitsdaten derart, dass die bestimmten Wahrscheinlichkeitsdaten einen Dispergierwert größer als null besitzen;

- Empfangen eines Werts der Überwachungsvariable der mindestens einen Betriebskomponente (110) von einer Messvorrichtung (111), die mit der mindestens einen Betriebskomponente (110) verbunden ist;
- Bestimmen eines Zustandsparameters für die mindestens eine Betriebskomponente (110) in Abhängigkeit von dem empfangenen Wert der Überwachungsvariable und den bestimmten Wahrscheinlichkeitsdaten und
- Ausgeben eines Ausgabesignals, das dem bestimmten Zustandsparameter entspricht.

17. Computerprogrammprodukt zur Verwendung in einer Überwachungsvorrichtung (1) nach mindestens einem der Ansprüche 1 bis 14, das Befehle umfasst, die, wenn das Computerprogrammprodukt ausgeführt wird, bewirken, dass die Berechnungsmittel der Überwachungsvorrichtung (1) das Verfahren nach Anspruch 16 ausführen.

**Revendications**

1. Dispositif de surveillance (1) destiné à surveiller des composants fonctionnels d'un système (100), comprenant :

- un dispositif de données de probabilité (10), configuré pour déterminer des données de probabilité pour au moins un composant fonctionnel (110) du système (100), qui décrivent une distribution de probabilité d'un fonctionnement sans erreur dudit au moins un composant fonctionnel (110) en dépendance d'une variable de surveillance dudit au moins un composant fonctionnel (110),
dans lequel le dispositif de données de probabilité (10) est configuré pour calculer les données de probabilité à partir de données d'entraînement dudit au moins un composant fonctionnel (110) et pour en outre effectuer une étape de correction dans un cas où les données de probabilité calculées ont une valeur de dispersion égale à zéro, un facteur de correction étant appliqué aux données de probabilité calculées de telle sorte que les données de probabilité déterminées ont une valeur de dispersion supérieure à zéro ;
- un dispositif de réception (20), configuré pour recevoir une valeur de la variable de surveillance dudit au moins un composant fonctionnel (110) à partir d'un dispositif de mesurage (111) connecté audit au moins un composant fonctionnel (110) ;
- un dispositif de diagnostic (30), configuré pour déterminer un paramètre d'état pour ledit au moins un composant fonctionnel (110) en dépendance de la valeur reçue de la variable de surveillance et des données de probabilité déterminées ; et
- un dispositif de sortie (40), configuré pour sortir un signal de sortie correspondant au paramètre d'état déterminé.

2. Dispositif de surveillance (1) selon la revendication 1, dans lequel
les données de probabilité calculées comprennent au moins une valeur de dispersion et une valeur moyenne pour décrire la distribution de densité de probabilité.

3. Dispositif de surveillance (1) selon la revendication 2, dans lequel
le dispositif de diagnostic (30) est configuré pour déterminer le paramètre d'état sur la base de la valeur de dispersion de la distribution de probabilité déterminée, d'une valeur moyenne de la distribution de probabilité déterminée et de la valeur reçue de la variable de surveillance.

4. Dispositif de surveillance (1) selon l'une des revendications 2 à 3, dans lequel
le dispositif de données de probabilité (10) est configuré pour appliquer le facteur de correction de telle sorte qu'une valeur moyenne des données de probabilité est égale à la valeur moyenne des données de probabilité calculées.

5. Dispositif de surveillance (1) selon l'une au moins des revendications 1 à 4, dans lequel
le dispositif de données de probabilité (10) est configuré pour appliquer le facteur de correction en ajoutant le facteur de correction à la valeur de dispersion des données de probabilité calculées.

6. Dispositif de surveillance (1) selon l'une au moins des revendications 1 à 5, dans lequel
la valeur de dispersion des données de probabilité calculées est spécifiée en tant que variante ou en tant qu'écart standard ou en tant qu'intervalle interquartile.

**7.** Dispositif de surveillance (1) selon l'une au moins des revendications 1 à 6, dans lequel

le dispositif de sortie (40) comprend une unité d'évaluation, configurée pour déterminer un paramètre de priorité, auquel au moins une première et une seconde valeur de priorité peuvent être attribuées, sur la base du paramètre d'état déterminé,

dans lequel l'unité d'évaluation est configurée pour attribuer la première valeur de priorité au paramètre de priorité dans un cas où le paramètre d'état prédéterminé est inférieur à une priorité prédéterminée seuil,

et dans lequel l'unité d'évaluation est configurée pour attribuer la seconde valeur de priorité au paramètre de priorité dans un cas où le paramètre d'état prédéterminé est supérieur ou égal à la priorité prédéterminée seuil,

**8.** Dispositif de surveillance (1) selon l'une au moins des revendications 1 à 7, dans lequel le dispositif de sortie (40) comprend une unité d'affichage (41), configurée pour afficher le paramètre d'état prédéterminé.

**9.** Dispositif de surveillance (1) selon l'une au moins des revendications 1 à 8, dans lequel le dispositif de réception (20) est en outre configuré pour recevoir les données d'entraînement dudit au moins un composant fonctionnel (110) depuis le dispositif de mesurage (110) et pour les fournir au dispositif de données de probabilité (10) et/ou pour les stocker dans un dispositif de stockage du dispositif de surveillance (1) et/ou pour les stocker dans une unité de stockage (12) du dispositif de données de probabilité (10).

**10.** Dispositif de surveillance (1) selon l'une au moins des revendications 1 à 9, dans lequel

le système (100) comprend N composants fonctionnels supplémentaires, N ≥ 1, et

dans lequel le dispositif de données de probabilité (10) est configuré pour calculer, pour chacun des N composants supplémentaires, des données de probabilité sur la base de données d'entraînement du composant respectif, en décrivant une distribution de probabilité d'un fonctionnement sans erreur du composant respectif en dépendance d'une variable de surveillance respective, et

dans lequel le dispositif de données de probabilité (10) est en outre configuré pour déterminer le facteur de correction à partir des données de probabilité calculées pour les N composants supplémentaires.

**11.** Dispositif de surveillance (1) selon la revendication 10, dans lequel
pour déterminer le facteur de correction, le dispositif de données de probabilité (10) est configuré pour déterminer une valeur de dispersion minimale non égale à zéro parmi les données de probabilité calculées pour les N composants supplémentaires, et pour attribuer la valeur de dispersion minimale non égale à zéro déterminée au facteur de correction.

**12.** Dispositif de surveillance (1) selon l'une des revendications 10 à 11, dans lequel
le système (100) comprend de multiples catégories fonctionnelles dans lesquelles sont gérés les composants opérationnels, les N composants supplémentaires appartenant à la même catégorie fonctionnelle.

**13.** Dispositif de surveillance (1) selon l'une au moins des revendications 10 à 12, dans lequel

le dispositif de données de probabilité (10) est configuré pour effectuer une étape de correction pour chacun des N composants supplémentaires dans un cas où les données de probabilité calculée du composant respectif ont une valeur de dispersion égale à zéro, un facteur de correction étant appliqué aux données de probabilité calculées de telle sorte que des données de probabilité sont déterminées comme ayant une valeur de dispersion supérieure à zéro,

dans lequel le dispositif de réception (20) est configuré pour recevoir, pour chacun des N composants supplémentaires, une valeur de la variable de surveillance respective depuis un dispositif de mesurage connecté à chacun des composants respectifs, et

dans lequel le dispositif de diagnostic (30) est configuré pour déterminer, pour chacun des N composants supplémentaires, un paramètre d'état en dépendance de la valeur reçue de la variable de surveillance et des données de probabilité déterminées respectives.

**14.** Dispositif de surveillance (1) selon la revendication 13,
dans lequel le dispositif de sortie (40) est configuré, pour chacun des N composants supplémentaires, pour sortir un signal de sortie correspondant au paramètre d'état déterminé du composant respectif.

**15.** Système de surveillance, comprenant :

- au moins un composant fonctionnel (110) ;
- au moins un dispositif de mesurage (111), qui est connecté audit au moins un composant fonctionnel (110) et qui est configuré pour mesurer une variable de surveillance dudit au moins un composant fonctionnel (110) ; et
- un dispositif de surveillance (1) selon l'une au moins des revendications 1 à 14, destiné à surveiller ledit au moins un composant fonctionnel (110), le dispositif de réception (20) du dispositif de surveillance (1) étant connecté audit au moins un dispositif de mesurage de fonctionnel (111).

16. Procédé mis en œuvre par ordinateur pour surveiller des composants fonctionnels d'un système (100), comprenant l'étape consistant à :

- déterminer des données de probabilité pour au moins un composant fonctionnel (110) du système (100) sur la base de données d'entraînement dudit au moins un composant fonctionnel (110), les données de probabilité décrivant une distribution de probabilité d'un fonctionnement sans erreur dudit au moins un composant fonctionnel (110) en dépendance d'une variable de surveillance dudit au moins un composant fonctionnel (110), comprenant en outre les étapes consistant à :
- calculer les données de probabilité à partir de données d'entraînement dudit au moins un composant fonctionnel (110), et
- corriger les données de probabilité calculées dans un cas où les données de probabilité calculées ont une valeur de dispersion égale à zéro, en appliquant un facteur de correction aux données de probabilité calculées de telle sorte que les données de probabilité déterminées ont une valeur de dispersion supérieure à zéro ;
- recevoir une valeur de la variable de surveillance dudit au moins un composant fonctionnel (110) depuis un dispositif de mesurage (111) connecté audit au moins un composant fonctionnel (110) ;
- déterminer un paramètre d'état pour ledit au moins un composant fonctionnel (110) en dépendance de la valeur reçue de la variable de surveillance et des données de probabilité déterminées ; et
- sortir un signal de sortie correspondant au paramètre d'état déterminé.

17. Produit de programme d'ordinateur destiné à être utilisé dans un dispositif de surveillance (1) selon l'une au moins des revendications 1 à 14, comprenant des instructions qui, quand le produit de programme d'ordinateur est exécuté, amènent le moyen de calcul du dispositif de surveillance (1) à exécuter le procédé selon la revendication 16.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016099863 A
- US 2019301979 A1